Europäisches Patentamt

European Patent Office

Office européen des brevets

(11) Numéro de publication: **0 344 066**
**A1**

## (12) DEMANDE DE BREVET EUROPEEN

(21) Numéro de dépôt: **89401415.8**

(51) Int. Cl.⁴: **H 02 G 1/12**

(22) Date de dépôt: **24.05.89**

(30) Priorité: **26.05.88 FR 8806995**

(43) Date de publication de la demande:
**29.11.89 Bulletin 89/48**

(84) Etats contractants désignés:
**AT BE CH DE ES GB GR IT LI LU NL SE**

(71) Demandeur: **SOCIETE D'APPAREILLAGES
ELECTRONIQUES
Z.I. de la Boistardière
F-37400 AMBOISE (FR)**

(72) Inventeur: **Vallet, Xavier
5 rue Jacques Pelletier
F-37400 Amboise (FR)**

(74) Mandataire: **Durand, Yves Armand Louis et al
Cabinet Z. Weinstein 20, Avenue de Friedland
F-75008 Paris (FR)**

(54) **Outil pour le dénudage de câbles coaxiaux.**

(57) L'outil selon l'invention permet le dénudage de câbles
coaxiaux comprenant un conducteur extérieur recouvert d'une
gaine isolante et un conducteur axial séparé du conducteur
extérieur par un matériau diélectrique. Il comprend un manchon
(6) pourvu d'un canal interne (7) dont la section est légèrement
supérieure à celle du câble coaxial à dénuder, et un
porte-couteaux (8) faisant saillie dans le manchon (6) avec
lequel il délimite une cavité de guidage (9) destinée à recevoir
l'une des parties terminales du câble coaxial à dénuder, le
porte-couteaux(8) comportant un couteau antérieur (10) et un
couteau postérieur (11) décalés axialement et positionnés dans
la cavité de guidage (9) de telle sorte que le premier puisse
enlever le diélectrique et le second le conducteur extérieur et la
gaine du câble coaxial à dénuder lorsque celui-ci est entraîné
en rotation autour de son axe, ainsi qu'un orifice calibré (12)
destiné à recevoir avec un faible jeu la partie du conducteur
axial qui est débarrassée du diélectrique.

FIG. 2

EP 0 344 066 A1

Bundesdruckerei Berlin

**Description**

## "Outil pour le dénudage de câbles coaxiaux."

La présente invention concerne un outil pour le dénudage de câbles coaxiaux comprenant un conducteur extérieur recouvert d'une gaine isolante et un conducteur axial séparé du conducteur extérieur par un matériau diélectrique.

Il n'existe pas actuellement d'outils permettant de dénuder avec rapidité et précision les parties terminales des câbles coaxiaux utilisés dans les réseaux de télécommunication.

La présente invention se propose de remédier à cette lacune et, pour ce faire, elle a pour objet un outil de dénudage qui se caractérise en ce qu'il comprend un manchon pourvu d'un canal interne dont la section est légèrement supérieure à celle du câble coaxial à dénuder, et un porte-couteaux faisant saillie dans le manchon avec lequel il délimite une cavité de guidage destinée à recevoir l'une des parties terminales du câble coaxial à dénuder, le porte-couteaux comportant un couteau antérieur et un couteau postérieur décalés axialement et positionnés dans la cavité de guidage de telle sorte que le premier puisse enlever le diélectrique et le second, le conducteur extérieur et la gaine du câble coaxial à dénuder lorsque celui-ci est entraîné en rotation autour de son axe, ainsi qu'un orifice calibré destiné à recevoir avec un faible jeu la partie du conducteur axial qui est débarrassée du diélectrique.

Grâce à cet outil, le dénudage des parties terminales des câbles coaxiaux peut maintenant être réalisé rapidement et avec une grande précision. Il suffit en effet d'introduire la partie terminale à dénuder dans la cavité de guidage et de faire tourner l'outil autour de son axe longitudinal pour que les couteaux antérieur et postérieur enlèvent le diélectrique, le conducteur extérieur et la gaine sur les longueurs souhaitées.

Pour faciliter l'évacuation des copeaux formés par les couteaux antérieur et postérieur, le manchon comporte avantageusement une fente dans sa partie située en arrière desdits couteaux.

Par ailleurs, le porte-couteaux comporte une entaille dont le fond coupe l'orifice calibré, parallèlement à l'axe longitudinal de ce dernier.

Les risques pour que des copeaux s'accumulent dans l'orifice calibré et perturbent le fonctionnement de l'outil sont ainsi éliminés.

Avantageusement, la partie du conducteur axial qui est débarrasée du diélectrique vient en butée contre le fond de l'orifice calibré lorsque le dénudage est terminé, ce qui permet de lui donner une longueur constante.

Il est par ailleurs souhaitable que l'orifice calibré soit prolongé axialement par un trou dont la section est inférieure à la sienne. Grâce à ce trou, les bavures de sciage présentes à l'extrémité libre du conducteur axial peuvent en effet être éliminées par frottement contre l'entrée du trou lorsqu' à la fin du dénudage, l'outil continue à être entraîné en rotation autour de son axe.

Un mode d'exécution de la présente invention sera décrit ci-après à titre d'exemple nullement limitatif en référence au dessin annexé dans lequel :

La figure 1 est une vue de côté de l'outil de dénudage conforme à l'invention ;

La figure 2 en est une vue de face ;

La figure 3 est une vue en perspective de son porte-couteaux ; et

Les figures 4 à 6 sont des vues schématiques en coupe d'un câble coaxial susceptible d'être dénudé à l'aide de l'outil conforme à l'invention, ces figures montrant le câble coaxial respectivement avant, pendant et après le dénudage.

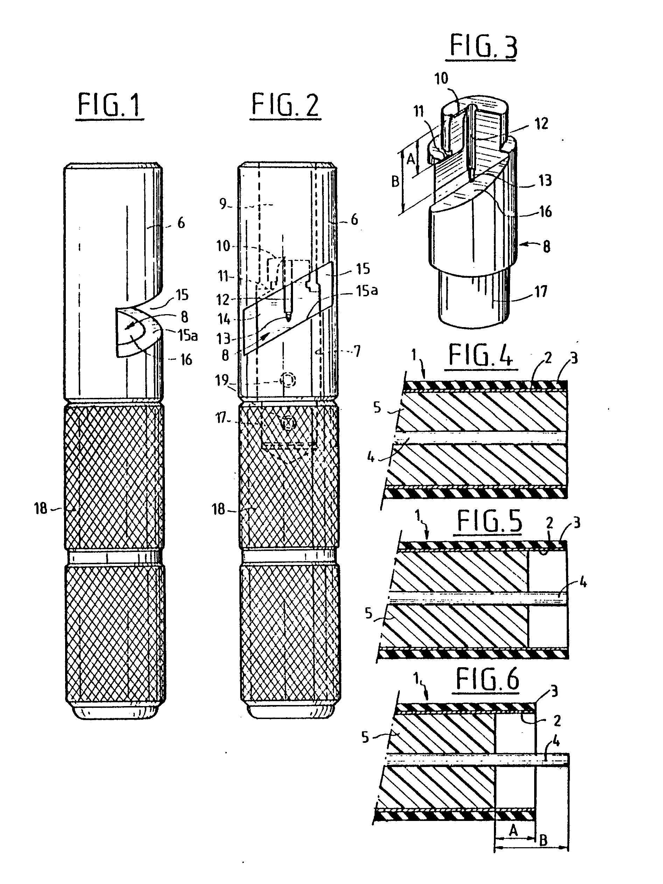

L'outil conforme à l'invention a été mis au point pour dénuder l'une des parties terminales d'un câble coaxial tel que celui désigné par la référence 1 sur les figures 4 à 6 et qui comprend d'une manière connue en soi un conducteur extérieur 2 recouvert d'une gaine isolante 3 et un conducteur axial 4 séparé du conducteur extérieur 2 par un matériau diélectrique 5.

On précisera à toutes fins utiles que le conducteur extérieur 2 du câble coaxial peut être constitué par un tube droit ou annelé ou par un feuillard contre-collé à la gaine isolante 3.

Cet outil comprend un manchon cylindrique 6 pourvu d'un canal interne 7 dont la section est légèrement supérieure à celle du câble coaxial 1, et un porte-couteaux 8 faisant saillie dans le manchon 6 avec lequel il délimite une cavité de guidage 9 destinée à recevoir la partie terminale du câble coaxial qui doit être dénudée.

Le porte-couteaux 8 comporte un couteau antérieur 10 et un couteau postérieur 11 décalés axialement et positionnés dans la cavité de guidage 9 de telle sorte que le premier puisse enlever le diélectrique 5 et le second le conducteur extérieur 2 et la gaine 3 du câble coaxial à dénuder lorsque l'outil est entraîné en rotation autour de son axe longitudinal. Il comporte en outre un orifice calibré 12 destiné à recevoir avec un faible jeu la partie terminale du conducteur axial 4 qui doit être débarrassée du diélectrique 5, un trou 13 prolongeant axialement l'orifice calibré 12 et dont la section est inférieure à celle de ce dernier, ainsi qu'une entaille 14 dont le fond coupe l'orifice calibré 12 et le trou 13, parallèlement à leur axe longitudinal.

Quant au manchon 8, il comporte dans sa partie située en arrière des couteaux 10, 11 une fente oblique 15 destinée à permettre l'évacuation des copeaux formés pendant le dénudage.

On précisera ici que les côtés transversaux de la fente oblique 15 sont coplanaires avec le fond de l'entaille 14 qui est délimitée vers l'arrière par une paroi 16 s'étendant dans le plan du côté longitudinal postérieur 15a de la fente oblique 15.

On précisera également que le porte-couteaux 8 est pourvu d'un prolongement axial 17 inséré dans un trou borgne ménagé dans l'une des extrémités d'un manche cylindrique 18 moleté sur sa surface latérale. Comme le montrent clairement les figures 1 et 2, le manchon 6 s'appuie contre le manche 18, tandis que le porte-couteaux 8 est fixé au manchon 6 et au manche 18 par deux vis noyées 19.

Pour utiliser l'outil de dénudage selon la présente invention, on procède de la manière suivante.

On introduit tout d'abord l'extrémité terminale à dénuder du câble coaxial 1 dans la cavité de guidage 9 du manchon, jusqu'à ce qu'elle vienne en butée contre le couteau antérieur 10.

On fait ensuite tourner l'outil autour de son axe longitudinal, en le saisissant par son manche de préhension 18. L'outil antérieur 10 découpe alors en copeaux le diélectrique 5 du câble coaxial, tandis que le conducteur central 4 de ce dernier pénètre progressivement dans l'orifice calibré 12.

On notera ici que l'outil antérieur 10 travaille seul jusqu'à ce que le diélectrique 5 soit enlevé sur une longueur A égale à la distance axiale séparant les outils antérieur 10 et postérieur 11.

Puis, l'outil postérieur 11 devient à son tour actif et découpe en copeaux le conducteur extérieur 2 et la gaine 3 du câble coaxial, son action et celle du couteau antérieur 10 se poursuivant jusqu'à ce que le conducteur axial 4 du câble coaxial vienne en butée contre le fond de l'orifice calibré 12 du porte-couteaux 8, c'est-à-dire jusqu'à ce que le couteau antérieur 10 enlève le diélectrique 5 sur une longueur B égale à la distance axiale séparant ledit couteau antérieur 10 du fond de l'orifice calibré 12.

Il est souhaitable de faire tourner l'outil pendant plusieurs tours après la venue en butée du conducteur axial 4 contre le fond de l'orifice calibré 12. Cette procédure permet en effet de donner à la partie terminale dénudée du câble coxial un aspect esthétique pleinement satisfaisant. Elle permet en outre d'éliminer les bavures de sciage qui seraient présentes à l'extrémité du conducteur axial, ces bavures étant éliminées en entrant en contact avec l'entrée du trou 13.

L'outil qui vient d'être décrit est utilisable à la main. Il pourrait toutefois être adapté sur une visseuse électrique ou pneumatique. Pour ce faire, il suffirait de réaliser dans l'axe de l'extrémité libre du prolongement axial 17 du porte-couteaux 8 un trou taraudé au pas des mandrins du commerce, de retirer le manche 18, et de visser le prolongement axial 17 du porte-couteaux 8 à la place du mandrin de la visseuse.

**Revendications**

1. Outil pour le dénudage de câbles coaxiaux (1) comprenant un conducteur extérieur (2) recouvert d'une gaine isolante (S) et un conducteur axial (4) séparé du conducteur extérieur (2) par un matériau diélectrique (5), caractérisé en ce qu'il comprend un manchon (6) pourvu d'un canal interne (7) dont la section est légèrement supérieure à celle du câble coaxial (1) à dénuder, et un porte-couteaux (8) faisant saillie dans le manchon (6) avec lequel il délimite une cavité de guidage (9) destinée à recevoir l'une des parties terminales du câble coaxial à dénuder, le porte-couteaux (8) comportant un couteau antérieur (10) et un couteau postérieur (11) décalés axialement et positionnés dans la cavité de guidage (9) de telle sorte que le premier puisse enlever le diélectrique (5) et le second le conducteur extérieur (2) et la gaine (3) du câble coaxial à dénuder lorsque celui-ci est entraîné en rotation autour de son axe, ainsi qu'un orifice calibré (12) destiné à recevoir avec un faible jeu la partie du conducteur axial (4) qui est débarrassée du diélectrique (5).

2. Outil selon la revendication 1, caractérisé en ce que le manchon (6) comporte une fente (15) dans sa partie située en arrière des couteaux antérieur (10) et postérieur (11).

3. Outil selon la revendication 1 ou 2, caractérisé en ce que le porte-couteaux (8) comporte une entaille (14) dont le fond coupe l'orifice calibré (12), parallèlement à l'axe longitudinal de ce dernier.

4. Outil selon l'une quelconque des revendications précédentes, caractérisé en ce que la partie du conducteur axial (4) qui est débarrassée du diélectrique (5) vient en butée contre le fond de l'orifice calibré (12) lorsque le dénudage est terminé.

5. Outil selon l'une quelconque des revendications précédentes, caractérisé en ce que l'orifice calibré (12) est prolongé axialement par un trou (13) dont la section est inférieure à la sienne.

6. Outil selon l'une quelconque des revendications précédentes, caractérisé en ce qu'il comporte un manche de préhension (18) auquel le porte-couteaux (8) et le manchon (6) sont reliés de manière amovible.

FIG.1

FIG.2

FIG.3

FIG.4

FIG.5

FIG.6

# DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | EP-A-0101191 (AMP)<br>* page 2, ligne 16 - page 4, ligne 26; figures 1-7 * | 1, 6 | H02G1/12 |
| A | US-A-3659483 (MATTHEWS)<br>* colonne 2, ligne 4 - colonne 4, ligne 27; figures 1-8 * | 1-3 | |

DOMAINES TECHNIQUES RECHERCHES (Int. Cl.4)

H02G

Le présent rapport a été établi pour toutes les revendications

| Lieu de la recherche | Date d'achèvement de la recherche | Examinateur |
|---|---|---|
| LA HAYE | 10 AOUT 1989 | DEMOLDER J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

EPO FORM 1503 03.82 (P0402)